(19) **Europäisches Patentamt / European Patent Office / Office européen des brevets**

(11) **EP 1 224 833 B1**

(12) **EUROPEAN PATENT SPECIFICATION**

(45) Date of publication and mention
of the grant of the patent:
**31.10.2007 Bulletin 2007/44**

(21) Application number: **01930813.9**

(22) Date of filing: **27.04.2001**

(51) Int Cl.:
***H04Q 11/00*** (2006.01)

(86) International application number:
**PCT/US2001/013508**

(87) International publication number:
**WO 2001/084875 (08.11.2001 Gazette 2001/45)**

(54) **ROBUST TRANSPORT OF IP TRAFFIC OVER WDM USING OPTICAL BURST SWITCHING**

ROBUSTER TRANSPORT VON IP VERKEHR ÜBER WDM MITTELS OPTISCHER BURSTVERMITTLUNG

TRANSPORT EFFICACE DE TRAFIC IP VIA MRL PAR COMMUTATION OPTIQUE DE RAFALES

(84) Designated Contracting States:
**FR GB IT**

(30) Priority: **03.05.2000 US 563338**

(43) Date of publication of application:
**24.07.2002 Bulletin 2002/30**

(73) Proprietor: **Nokia Siemens Networks Oy
02610 Espoo (FI)**

(72) Inventors:
• **CHASKAR, Hemant
Woburn, MA 01801 (US)**
• **VERMA, Sanjeev
Woburn, MA 01801 (US)**
• **RAVIKANTH, R.
Waltham, MA 02451 (US)**
• **DIXIT, Sudhir, S.
Weston, MA 02493 (US)**

(74) Representative: **Read, Matthew Charles et al
Venner Shipley LLP
20 Little Britain
London EC1A 7DH (GB)**

(56) References cited:
**EP-A- 1 089 498**

• YOO M ET AL: "NEW OPTICAL BURST SWITCHING PROTOCOL FOR SUPPORTING QUALITY OF SERVICE" PROCEEDINGS OF THE SPIE, SPIE, BELLINGHAM, VA, US, vol. 3531, November 1998 (1998-11), pages 396-405, XP000950072
• QIAO C ET AL: "CHOICES, FEATURES AND ISSUES IN OPTICAL BURST SWITCHING" OPTICAL NETWORKS MAGAZINE, SPIE, BELLINGHAM, WA, US, vol. 1, no. 2, April 2000 (2000-04), pages 36-44, XP000969814 ISSN: 1388-6916

**Description**

**TECHNICAL FIELD**

**BACKGROUND ART**

The present invention relates to the routing of Internet protocol traffic using optical burst switching and more particularly the present invention relates to selecting the offset between a control packet and a data burst to optimize the traffic flow.

Rapid growth in the volume of Internet traffic over the last decade has generated a considerable amount of interest in devising new high-speed transmission and switching technologies. Wavelength division multiplexing can support a number of simultaneous high-speed channels on a single optical fiber and can thereby provide an enormous bandwidth at the physical layer. In order to exploit this bandwidth to meet the future traffic requirements, higher layer communication protocols must be developed to make efficient use of the transmission capacity of such optical fiber arrangements.

Presently, wavelength division multiplexing deployment is mostly point-to-point and the Internet protocol routers and asynchronous transfer mode switches in such a backbone still use electronic processing, such as header processing for routing including table lookups or label swapping and data-processing for multiplexing including mapping Internet protocol packets into asynchronous transfer mode cells before transporting over wavelength division multiplexed links using SONET frames. Since the operating speed of electronic devices is considerably slower than the transmission speed provided by the optical wavelength division multiplexing layer, the optical-electronics-optical conversion at the intermediate nodes in the data path of the wavelength division multiplexing layer should be eliminated.

Ideally, at all-optical packet switch arrangement so as to eliminate the electronics entirely would eliminate the speed bottleneck. However, the present limitations of optical buffering, among other things, preclude entirely optical packet switching today.

As a presently implementable alternative to all-optical packet switches, optical burst switching still allows the switching of data channels in the optical domain by performing resource allocation in the electronic domain. In optical burst switching, a control packet precedes every data burst and the control packet and the corresponding data burst are launched at the source at points in time separated by an offset. The offset is determined at the time that the control packet is launched at the source. The control packet includes in formation required to route the data burst through the network and also includes the length of the corresponding data burst and its offset value. The control packet is processed electronically at each of the intermediate nodes for making routing decisions and the switching fabric at each node is configured accordingly to switch to the data burst that is expected to arrive after a time interval corresponding to the offset field of the control packet. Thus, the data burst is entirely optically switched to eliminate the electronic bottleneck.

The following papers are considered to provide complimentary discussions of the background art: Yoo M et al, "New optical burst switching protocol for supporting quality of service", Proceeding of the SPIE, SPIE, Bellingham, VA, US, vol. 3531, pages 396-405 XP000950072; and Qiao C et al, "Choices, features and issues in optical burst switching" Optical networks magazine, SPIE, Bellingham, VA, US, vol. 1, no. 2, pages 36-44 XP000969814, ISSN:1388-6916

**DISCLOSURE OF THE INVENTION**

The present invention determines the offset between the control packet and the data burst. While the offset must be at least as large as the sum of the processing times for the control packet at each of the intermediate nodes, the present invention determines an offset which can reduce the contention among reservations requested by different control packets for different flows so as to significantly improve the performance of the optical burst switching arrangement. That is, the present invention determines the offsets of successive data bursts from their control packets which results and reliable operation of the optical burst switching wavelength division multiplexing network. In the present invention, the data bursts are released into the network at random times to improve the burst blocking performance at individual nodes in the networkwide-contention-prone optical burst switching wavelength division multiplexing backbone.

**BRIEF DESCRIPTION OF THE DRAWINGS**

The foregoing and a better understanding of the present invention will become apparent from the following detailed description of example embodiments and the claims when read in connection with the accompanying drawings, all forming a part of the disclosure of this invention. While the foregoing and following written and illustrated disclosure focuses on disclosing example embodiments of the invention, it should be clearly understood that the same is by way of illustration and example only and the invention is not limited thereto. The spirit and scope of the present invention are limited only by the terms of the appended claims.

The following represents brief descriptions of the drawings, wherein:

Figure 1 is a block diagram of optical burst switching network.
Figure 2 is a block diagram of an optical network transmitting Internet protocol data over a wavelength division multiplexing transmission backbone using multiprotocol label switching.
Figure 3 is a block diagram illustrating a shaping interface between the Internet protocol layer and the wavelength division multiplexing optical layer.
Figure 4 is a timing diagram of the data bursts before and after shaping and the control packet.
Figure 5 illustrates the burst blocking probability as a function of the offered load for an interface supporting various numbers of wavelengths.
Figure 6 illustrates the mapping of Internet protocol classes onto optical label switched paths.
Figure 7 illustrates quality of service differentiation in terms of burst blocking probability.

## BEST MODE FOR CARRYING OUT THE INVENTION

Before beginning a detailed description of the subject invention, mention of the following is in order. When appropriate, like reference numerals and characters may be used to designate identical, corresponding or similar components in differing drawing figures. Furthermore, in the detailed description to follow, example sizes/models/values/ ranges may be given, although the present invention is not limited thereto. Still furthermore, the clock and timing signal figures are not drawn to scale, and instead, exemplary and critical time values are mentioned when appropriate. In addition, well-known power connections to the components have not been shown within the drawing figures for simplicity of illustration and discussion and so as not to obscure the invention.

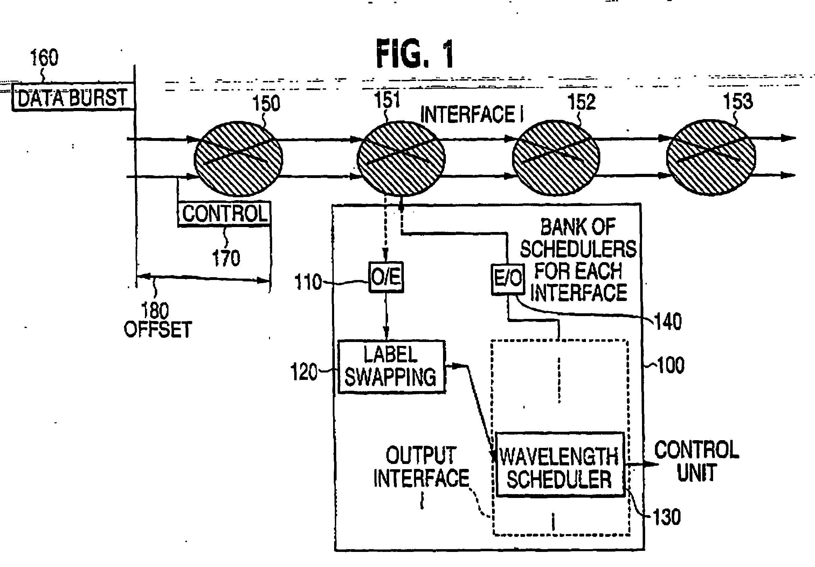

Figure 1 is a block diagram of an optical burst switching network. Interfaces 150, 151,152, and 153 are disposed along the optical switching path. When a data burst 160 is ready to be transmitted at the source, first, a control packet 170 is launched, and a data burst is launched after an offset 180 from the start of the control packet 170. In the control unit 100, of interface i, the control packet 170 is first converted from an optical signal into an electrical signal by an optical-electrical converter 110. The output of the optical-electrical converter 110 controls label swapping 120 and a wavelength scheduler 130 and the resultant processed output is converted from electrical signal into an optical signal in an electrical-optical converter 140 whose output is used to switch the data burst 160 that is expected to arrive after the time interval contained within the offset field of the control packet 170.

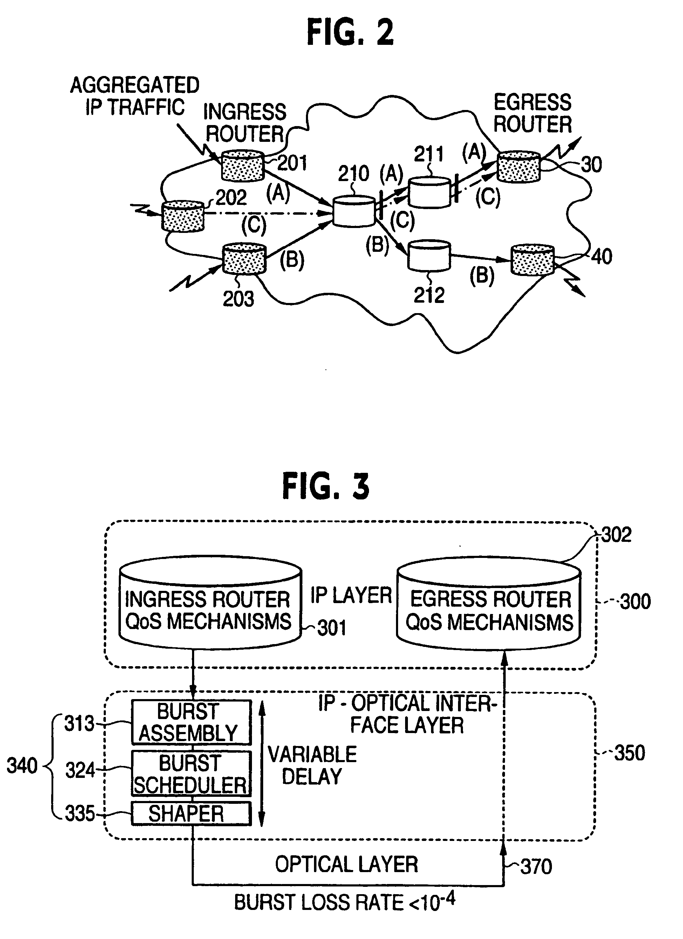

Figure 2 is a block diagram of an optical network transmitting Internet protocol data over a wavelength division multiplexing transmission backbone using multiprotocol label switching.

Internet protocol routers 201,202, and 203 are disposed at the ingress of the network and Internet protocol routers 230 and 240 are disposed at the egress of the network. Intermediate nodes 210, 211, and 212 are disposed between the ingress routers and the egress routers. Data bursts are assembled at the ingress routers and delivered to the ingress routers via the intermediate nodes in an all-optical domain. It is assumed that there is no buffering of data bursts at the intermediate nodes. Semi-permanent data pipes can be set up between different ingress-egress pairs using multiprotocol label switching.

An Internet protocol routing and sorting engine causes a major bottleneck at high transmission speeds due to its processing requirements. Multiprotocol label switching is a forwarding technique which uses the labels associated with packets to make packet forwarding decisions at the network nodes rather than by conventional destination-based hop-by-hop forwarding arrangements. In multiprotocol label switching, the space of all possible fowarding options is partitioned into forwarding equivalence classes. For example, all of the packets destined for a given egress node which have the same quality of service requirement may belong to the same forwarding equivalence class. The packets are labeled at the ingress in accordance with the forwarding equivalence class with which they belong. Each of the intermediate nodes uses the label of an incoming packet to determine its next hop and also performs label swapping, that is, it replaces the incoming label with the new outgoing label which identifies the respective forwarding equivalence class for the downstream node. Such a label-based forwarding technique reduces the processing overhead required for routing at the intermediate nodes, thereby improving their packet forwarding performance and scalability. Furthermore, the label swapping processed used by multiprotocol label switching creates a multipoint-to-point routing tree rather than a routing mesh used in conventional networks. Multiprotocol label switching also provides constraint-based routing in which the ingress node can establish an explicit route through the network rather than inefficiently carrying the explicit route in each packet. Instead, multiprotocol label switching allows the explicit route to be carried only at the time that the label switched path is set up. The subsequent packets traversing this path are forwarded using packet labels.

The control packets that precede the data bursts can be used to carry multiprotocol label switching labels. The intermediate nodes use the labels in incoming control packets to set up the switch fabric, thereby allowing the data burst to be forwarding in an all-optical domain. The data bursts are freed from carrying any labels. Multiprotocol label switching thereby allows the establishment of data pipes through an optical burst switching wavelength division multiplexing domain between different ingress-egress pairs. These data pipes will be referred to hereinafter as optical LSP's (label switched paths).

Figure 3 is a block diagram illustrating a shaping interface between the Internet protocol layer and the wavelength division multiplexing optical layer. A medium access control interface 350 is shown as being disposed between the Internet protocol layer 300 and the optical layer 370. The medium access control layer 350, which includes a burst assembly 313 and a burst scheduler 324 and shaper 335, assembles data bursts from the packets generated by the Internet protocol layer 300 for each optical LSP. Various quality of service considerations, such as DiffServ can be used at the Internet protocol layer 300 before the packets are released to the medium access control layer 350.

The optical LSP 340 of the medium access control 350 appears to the Internet protocol layer 300 as a reliable data pipe that guarantees certain burst blocking probability to the Internet protocol layer 300. The delay across the optical LSP 340 has to components, namely, a fixed component which mainly consists of the propagation delay across the optical backbone and a variable component which depends on the design of the shaper 335 and burst assembler 313 at the ingress router.

An output interface of a node in the optical burst switching wavelength division multiplexing domain received traffic from different LSP's. This creates the potential for contention among different LSP's. When the control packets from different LSP's request reservations for their data bursts on a particular wavelength of a given output interface for time intervals which overlap each other, hereinafter referred to as burst blocking, only one of these requests can be granted. Accordingly, some control packets must be dropped at that interface and is in turn results in the loss of data bursts corresponding to the dropped control packets.

The data loss rate due to burst blocking will be large if the reservation requests arriving at a given output interface from different optical LSP's are time correlated. Furthermore, due to the unpredictability of traffic, it is difficult to always guarantee a low burst blocking probability.

In accordance with a present invention, a shaping mechanism, including the shaper 335, for example, is incorporated in the medium access control layer 350 at the ingress thereof which facilitates the determination of offsets for the successive data bursts so as to maintain a low burst blocking probability at all times in the optical burst switching wavelength division multiplexing layer. The shaping mechanism removes the time correlation among the reservation requests of different optical LSP's and enforces predetermined statistics on the data stream entering the optical burst switching wavelength division multiplex layer, irrespective of the statistics of the Internet protocol layer that resides over it. Due to the bufferless operation of the optical burst switching wavelength division multiplexing layer, this statistic is invariant even if the burst stream traverses multiple nodes in the optical burst switching wavelength division multiplexing domain. This results in a robust layer in which the probability of burst blocking is always maintained below a low predetermined value irrespective of the operation of the sources generating the data packets.

As shown in figure 3, the stream of data bursts to be sent over a particular optical LSP is inputted to the shaper 335 which determines the value of the offset between the data burst and its corresponding control packet. The shaper 335 then forms the control packet and transmits it over the control channel. The control packet includes information such as the offset value between the data burst and the corresponding control packet, the length of the data burst and the routing label. The shaper 335 causes the data burst to be outputted to the optical burst switching wavelength division multiplexing layer after the control packet has been transmitted, the data burst being outputted a period of time equal to the offset value after the control packet has been transmitted.

The offset between a data burst and its corresponding control packet has two parts, namely, a constant part to account for the processing time of the control packet at the intermediate nodes and a variable part which is varied from burst to burst to lower the probability of burst blocking. The variable part of the offset for the ith data burst, denoted by $\delta_i$, is determined as follows:

Let $T_0=0, T_1, T_2, ...$denote the times of occurrences of points of a random point process in which the time periods between the occurrences of successive points (i.e., $T_i-T_{i-1}$, for $i \geq 1$) are independently and identically distributed according to the probability distribution $F(.)$. Let $T_0(\omega)=0, T_1(\omega), T_2(\omega), ...$denotes a particular realization (sample path) of this random point process. If the ith data burst arrives at the shaper at time $a_i$ and that the $(i-1)$th data burst is released at $T_{ki-1}(\omega)$, then the ith burst is released at time $T_{ki}(\omega)$, where $T_{ki}(\omega)$ is the first point after $T_{ki-1}(\omega)$ satisfying the following inequality:

$$T_{ki-1}(\omega) - T_{ki-1}(\omega) \geq L_{i-1} \text{ and } T_{ki}(\omega) \geq a_i.$$

Hence, the offset between the ith data burst and the control packet corresponding to it is determined by the following equation:

$$\delta_{ii} = T_{ki}(\omega) - a_i.$$

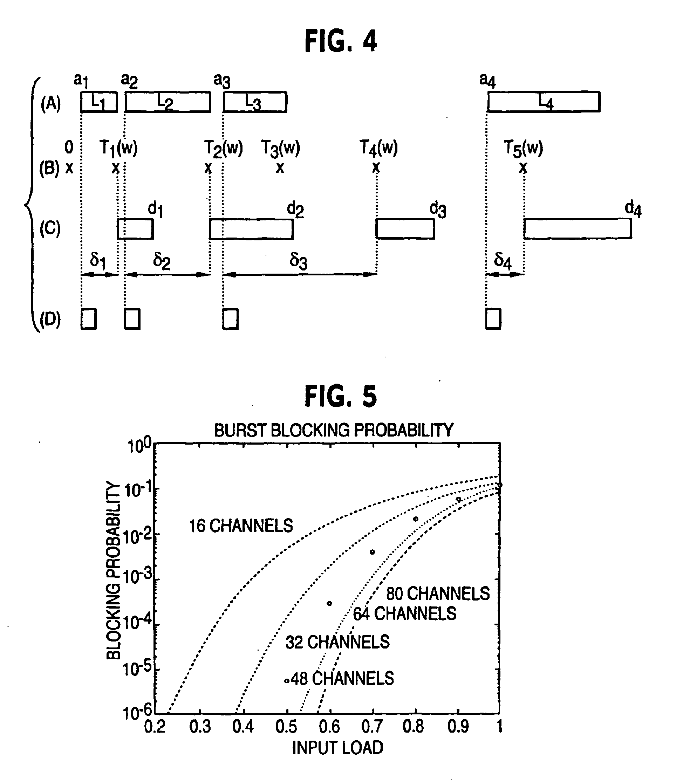

The shaping scheme described above (see Figure 4) is equivalent to leaky bucket regulator with no buffering provided for tokens, and in which tokens arrive at $T_0(\omega), T_1(\omega), T_2(\omega), ....$

Figure 4 is a timing diagram of the data bursts before and after shaping and the control packets. Figure 4 (A) illustrates the data bursts L1, L2, L3, and L4 before shaping by the shaper 335. Figure 4(B) illustrates the arrival of the tokens T1, T2, T3, T4 and T5. Figure 4(C) illustrates the data bursts d1,d2, d3, and d4. Figure 4(D) illustrates the control packets corresponding to the data bursts of Figure 4(A).

As illustrated in Figure 4, the data bursts are of random length and occur at seemingly random times which may in fact be time correlated. As noted above, the token arrivals have been chosen so as to be randomly distributed. The data burst L1 is shaped by the shaper 335 into the shaped data burst d1 by having its transmission beginning at the arrival of token T1 which occurs at a time $\delta 1$ after the start of the control packet corresponding to the data burst L1. Similarly, the shaped data burst d2 has its transmission beginning at the arrival of the token T2 which occurs at a time $\delta 2$ after the start of the control packet corresponding to the data burst L2. Shaped data burst d3, on the other hand, has its transmission beginning at the arrival of token T4 which occurs at a time $\delta 3$ from the start of the control packet corresponding to the data burst L3. This is due to the fact that the token T3 arrives during the pendency of the shaped data burst d2. Since the shaped data burst d3 can not commence prior to the completion of the shaped data burst d2, token T3 is not used. Shaped data burst d4 has its transmission beginning at the arrival of token T5 which occurs at a time $\delta 4$ from the start of the control packet corresponding to the data burst L4.

The type of shaping described above regulates the average rate at which data bursts are released into the optical burst switching wavelength division multiplexing layer. This rate is equal to the reciprocal of the mean of the probability distribution F (.) used to generate the tokens. Furthermore, the randomized generation of tokens prevents synchronization among the token streams of different LSP's. This is significant in that if the token generators of two LSP's traversing the same output interface of a particular node in the optical burst switching wavelength division multiplexing network happen to be synchronized, the data bursts in these LSP's will have a high probability of colliding with each other at that interface, thereby causing excessive data losses. It is possible for the random generators for tokens at different hosts to be initialized so as to prevent inadvertent synchronization.

The proposed shaping scheme also imposes the following property of the stream of data bursts of any optical LSP.Let$\{A(t)\}_{t \geq 0}$ denote total data arriving over an optical LSP until time $t$ at *any node* (ingress or intermediate) in the OBS WDM network. Then,

$$A(t) - a(s) \leq A_x(t) - A_x,$$

a.s., (almost surety), for all $t \geq s$,

where $\{A_x(t)_{t \geq} 0$ denotes total data that would have arrived on that LSP until time $t$ at that node, if data bursts were arriving at $T_0, T_1, T_2.....$

It is easy to see that the domination as in Eq. 1 holds at the output of the shaper of every optical LSP, by virtue of the shaping scheme. As data bursts traverse various nodes in the optical backbone, some of them can *only be discarded,* due to contention. Furthermore, due to inherently bufferless forwarding, the relative positions of the data bursts of any optical LSP remain unchanged even after these data bursts traverse a number of nodes. Hence, the domination as in Eq. 1 holds at the output interface of every node that a given optical LSP traverses.

A framework for resource provisioning an admission control, based on the above noted shaping scheme, is provided below and in addition, the role of this shaping scheme in improving the performance of an optical burst switching wavelength division multiplexing layer will be demonstrated below for the case of TCP/IP traffic.

The following is a description of one example of how the shaping scheme can be used for traffic engineering in an OBS WDM network. Consider an output interface (fiber) of any node in an OBS WDM network. Suppose that this node is being traversed by N data pipes (optical LSP's) with the provisional data rates of $r_1,...,r_N$, respectively. If the data bursts entering into these LSP's are shaped at the ingress using Poisson shapers (this means that the probability distribution for the time interval between the successive tokens of the $i$th optical LSP, denoted by $F_i(.)$, is chosen to be exponential), the following holds for their data arriving at the output interface under consideration. For all $t \geq s$,

$$Ai(t) - Ai(s) \le AP(r_i)(t) - AP(r_i)(s),$$

$$\text{a. s, for all } 1 \le i \le N, \qquad (2)$$

$$A(t) - A(s) = \sum_{i=1}^{N} A_i(t) - A_i(s)) \le AP_{(r)}(t) - AP_{(r)}(s), \text{ a. s.} \qquad (3)$$

and

Here, $A_i(t)$ denotes the total data arriving over the ith optical LSP until time $t$, AP$(x)(t)$ denotes the data that would arrive if the data bursts were arriving according to a Poisson process of rate $x$, and $r = \sum_{i=1}^{N} r_i.$

Now, if $p_{actual}(r_1,...,r_N)$ denotes the actual burst blocking probability at the given output interface, it is intuitively appealing to say that

$$p_{actual}(r_1,\ldots,r_N) \le p_{Poisson}(r), \qquad (4)$$

where $p_{Poisson}(r)$ denotes the burst blocking probability at that interface if the bursts were arriving according to the Poisson process of rate r. The right hand side of Inequality 4 is given by the well known Erlang loss formula,

$$p_{Poisson}(r) - \dfrac{(r/\mu)^c / c!}{\sum_{i=0}^{c} r/\mu)^c / c!} \qquad (5)$$

where $c$ is the total number of wavelengths at the output interface, and $1/\mu$ is the average packet length.

If the establishment of a new optical LSP, requiring a data rate of $r_{N+1}$ and a burst blocking probability of $r_{N+1}$, is requested through a given output interface at a node in an OBS WDM network, it can be admitted if and only if

$$p_{Poisson}(r) \le p_{N+1}, \text{ with } r = \sum_{i=1}^{N+1} r_i \qquad (6)$$

Figure 5 illustrates the burst blocking probability as a function of the offered load for in interface supporting various numbers of wavelengths. Specifically, Figure 5 shows the case for in interface supporting 16, 32, 48, 64, and 80 wavelength channels. It can be seen from Figure 5, that a wavelength division multiplexing network in accordance with the present invention can be operated at high utilizations using optical burst switching when the number of wavelengths is large. For example, as illustrated in Figure 5, with a target burst blocking probability which is less than $10^{-4}$, a wavelength division multiplexing network in accordance with the present invention can operate with greater than 60 percent utilizations if the number of wavelength channels is 64.

The approach to supporting IP over optical backbone consists of providing MAC layer functionalities so that the underlying optical layer (using OBS) appears to the IP layer as a reliable data pipe (see Figure 3). By virtue of the shaping scheme and the connection admission control procedure described above, the burst blocking performance of every optical LSP is guaranteed. It is also possible to render some end-to-end delay characteristics to optical LSP as follows.

As seen from Figure 3, the various elements in the MAC layer 350 such as the burst assembler 313, the burst scheduler 324 and the shaper 335, introduce some amount of delay at the ingress of an optical LSP. The following is a description of one example of how the delay due to shaping can be controlled. Assume that the establishment of an optical LSP, requiring a data rate of $r_{N+1}$, a burst blocking probability of $p_{N+1}$ and an end-to-end delay guarantee of $D_{N+1}$, is requested between a chosen ingress-egress pair. The actual token rate may be chosen such that:

Prob[Time interval between successive tokens >

$D_1$] > ε, and Token rate > $r_{N+1}$.

This value token rate is then used in Eq. 6 in place of $r_{N+1}$ to take admission control decision.

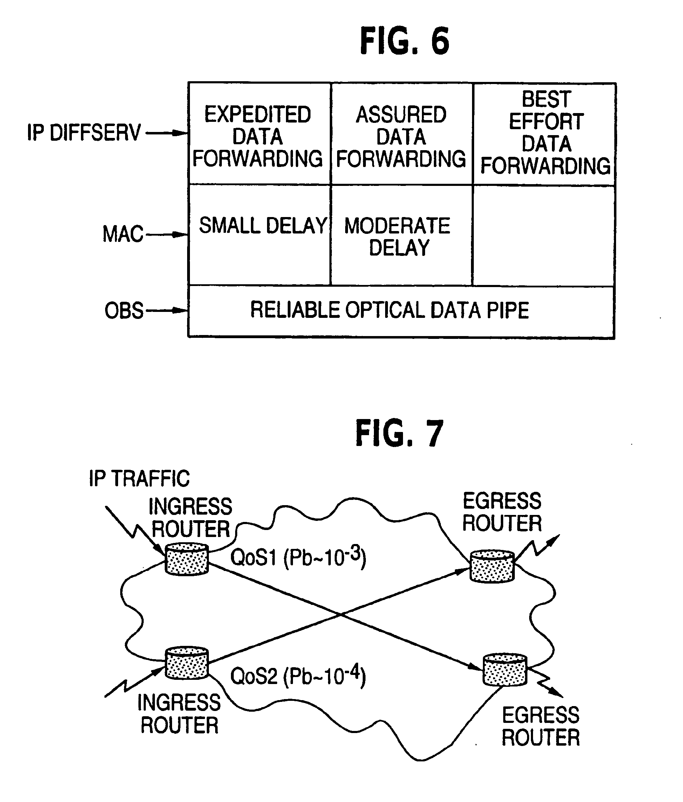

Figure 6 shows how IP DiffServ classes can be mapped onto optical LSP's that are now reliable, as well as have certain delay characteristics.

Another quality of service dimension is to logically partition the backbone into a number of optical LSP's, each providing different levels of reliability given in terms of burst blocking probability. The reliability of different optical LSP's can then be mapped onto some cost function. This, in turn, can be used by the routing protocols to forward IP packets to appropriate edge routers depending on their quality of service needs (now in terms of loss rate). This is depicted in Figure 7.

The bottleneck output interface (fiber) of a node in an OBS WDM network supporting three OC 12 wavelengths (622 Mb/s per wavelength) per output interface has been simulated. This interface is traversed by a number of optical LSP's. Ten such optical LSP's each carrying ingress-to-egress data traffic supported on TCP/IP are assumed. There are (forward paths of) 4 TCP sessions in each of these optical LSP's. The acknowledgment paths (or reverse paths) of these TCP's are taken to be lossless, and they introduce only a constant delay. Simulations were run with a simulation tool.

Each of the 40 TCP sessions is started at time instant sampled from the uniform distribution over (0 s, 1 s). Once started, all TCP sources always have data to send. For simplicity, every data burst that is assembled at the MAC layer is taken to be precisely one IP packet. The delay introduced by the reverse path of every TCP session is sampled from the uniform distribution as explained in the next section.

AS shown in Figure 5, the burst traffic offered to each LSP is shaped at the ingress. The probability distribution $F_i(.)$ used in shaping the burst traffic of the $i$ th optical LSP is taken to be exponential with a meaning $l/r_1$. This causes the data burst arrivals at the output of each shaper to be dominated by the Poisson process of rate $r_1$, and the total arrive process of data bursts at the bottleneck output interface to be dominated by the Poisson process of rate $r = \sum_{i=1}^{10} r_i.$

Simple greedy and exhaustive wavelength selection policy may be used to assign the reservations to the control packets arriving at the bottleneck output interface.

Simulation experiments have been run in different regimes of the target burst blocking probability, namely, $10^{-2}$, $10^{-3}$ and $10^{-4}$. For each of these values, the total allowable load $r$ at that output interface is calculated using Erlang loss formula (Eq. 5), with $c = 3$. $r_i$ is then taken to be $r/10$, for $i = 1, ..., 10$. For the target burst blocking probabilities of $10^{-2}$, $10^{-3}$ and $10^{-4}$, the delay introduced by the reverse path of every TCP session is sampled from the uniform distribution over [0 ms, 1 ms), [0 ms, 25 ms) and [0 ms, 50 ms), respectively. This is done so that the actual aggregate load offered by all TCP's is not much lower than the designed throughput value. For example, 40 TCP's fail to offer an average load as large as about 311 Mb/s at the packet loss probability of $10^{-2}$ in the end-to-end path, if their round trip times are larger than about 1 ms. It is as fundamental fact that the TCP throughput significantly deteriorates if the end-to-end packet loss probability is much larger than the inverse square of the product of the bottleneck bandwidth and the round trip delay. And, it is clearly trivial to establish Inequality 4 if the offered average load itself is much lower than the designed value for the load. The results are shown in Table I below.

| Simulation experiment | Throughput (MB/s) | | Without shaping | Burst blocking probability | | Without shaping |
|---|---|---|---|---|---|---|
| | With shaping | | | With shaping | | |
| | Observed | Designed | | Observed | Designed | |
| 1 | 302.29 | 311.00 | 0 | $0.73 \times 10^{-2}$ | $1.72 \times 10^{-2}$ | 1.0 |
| 2 | 146.68 | 155.0 | 0 | $1.17 \times 1010^{-3}$ | $2.00 \times 10^{-3}$ | 1.0 |
| 3 | 62.20 | 62.20 | 0 | $0.7 \times 10^{-3}$ | $1.51 \times 10^{-4}$ | 1.0 |

This concludes the description of the example embodiments. Although the present invention has been described with reference to a number of illustrative embodiments thereof, it should be understood that numerous other modifications and embodiments can be devised by those skilled in the art that will fall within the spirit and scope of the principles of this invention. More particularly, reasonable variations and modifications are possible in the component parts and/or arrangements of the subject combination arrangement within the scope of the foregoing disclosure, the drawings, and the appended claims. In addition to variations and modifications in the component parts and/or arrangements, alternative uses will also be apparent to those skilled in the art.

**Claims**

1.  A method of selecting the offset (180) between data bursts (160) and their respective control packets (170) in an optical burst switching arrangement, the method comprising:

    randomly generating a plurality of tokens (T1, T2, etc,);
    receiving a plurality of sequentially generated data bursts (L1, L2 etc.);
    receiving a plurality of control packets, each control packet corresponding to a respective one of said plurality of data bursts;
    first outputting one of said plurality of control packets and then outputting its corresponding respective data burst (d1, d2, etc.) at a time corresponding to the generation of the first of said plurality of tokens which occurs at a time in which no data burst is being outputted, the outputting of the data burst being offset from the outputting of its corresponding respective control packet by a time period ($\delta_1$, $\delta_2$, etc.).

2.  The method of claim 1, wherein an average rate at which said plurality of data bursts are outputted is equal to the reciprocal of the mean of the probability distribution used to generate said plurality of tokens.

3.  The method of claim 1, wherein if T0=0, T1, T2, ... denote the times of occurrences of points of a random point process in which the time periods between occurrences of success of points (Ti-T(i-1) for i>1) are independently and identically distributed according to a probability distribution F(.) and if T0($\omega$)=0, T1($\omega$), T2($\omega$), ... denote a particular realization of the random point process and if the ith data burst arrives at a time ai, and the (i-1)th data burst is outputted at T(ki-1)($\omega$), then the ith data burst is outputted at time Tki($\omega$) which is the first point after T(ki-1)($\omega$) satisfying the following inequality:

    Tki($\omega$)-T(ki-1)($\omega$)$\geq$L(i-1) and Tki($\omega$)$\geq$ai, L(i-1) being the(i-1)th inputted data burst; and wherein:
    $\delta i$= Tki($\omega$)-ai, $\delta i$ being the offset between the ith data burst and its corresponding respective control packet.

4.  The method of claim 2, wherein if T0=0, T1, T2, ... denote the times of occurrences of points of a random point process in which the time periods between occurrences of success of points (Ti-T(i-1) for i$\geq$1) are independently and identically distributed according to a probability distribution F(.) and if T0($\omega$)=0, T1($\omega$), T2($\omega$), ... denote a particular realization of the random point process and if the ith data burst arrives at a time ai, and the (i-1)th data burst is outputted at T(ki-1)($\omega$), then the ith data burst is outputted at time Tki($\omega$) which is the first point after T(ki-1)($\omega$) satisfying the following inequality:

    Tki($\omega$)-T(ki-1)($\omega$)>L(i-1) and Tki($\omega$)$\geq$ai, L(i-1) being the(i-1)th inputted data burst; and wherein:
    $\delta i$= Tki($\omega$)-ai, $\delta i$ being the offset between the ith data burst and its corresponding respective control packet.

5.  The method of any of claims 1 to 4, wherein the plurality of tokens is randomly generated according to a Poisson process.

6.  An apparatus for selecting the offset (180) between data bursts (160) and their respective control packets (170) in an optical burst switching arrangement, the apparatus comprising:

    a token generator for randomly generating a plurality of tokens (T1, T2, etc.);
    a data burst receiver for receiving a plurality of sequentially generated data bursts (L1, L2 ctc.);
    a control packet receiver for receiving a plurality of control packets, each control packet corresponding to a respective one of said plurality of data bursts;
    a transmitter for first outputting one of said plurality of control packets received by said control packet receiver and for then outputting its corresponding respective data burst (d1, d2, etc.) received by said data burst receiver at a time corresponding to the generation of the first of said plurality of tokens by said token generator which occurs at a time in which no data burst is being outputted by said transmitter, the outputting of said data burst being offset from the outputting of its corresponding respective control packet by a time period ($\delta_1$, $\delta_2$, etc.).

**7.** The apparatus of claim 6, wherein said transmitter is adapted to output said plurality of data bursts at an average rate which is equal to the reciprocal of the mean of the probability distribution used to generate said plurality of tokens.

**8.** The apparatus of claim 6 or 7, wherein if T0=0, T1, T2, denote the times of occurrences of points of a random point process in which the time periods between occurrences of success of points (Ti-T(i-1) for i≥1) are independently and identically distributed according to a probability distribution. F(.) and if T0($\omega$)= 0, T1($\omega$), T2($\omega$), ... denote a particular realization of the random point process and if the ith data burst arrives at a time ai, and the (i-1)th data burst is outputted at T(ki-1)($\omega$), then the ith data burst is outputted at time Tki($\omega$) which is the first point after T(k-1) ($\omega$) satisfying the following inequality:

Tki($\omega$)-T(ki-1)($\omega$)≥L(i-1) and Tki($\omega$)≥ai, L(i-1) being the(i-1)th inputted data burst; and wherein:
$\delta$i= Tki(w) - ai, $\delta$i being the offset between the ith data burst and its corresponding respective control packet.

**9.** The apparatus of any of claims 6 to 8, wherein said token generator is adapted to randomly generate said plurality of tokens according to a Poisson process.

**10.** An optical burst switching apparatus comprising:

a source generator for generating a plurality of data bursts and their respective control packets, each data burst being generated at a time which is offset from that of its respective control packet;
an ingress router for receiving and outputting said plurality of data bursts and their respective control packets generated by said source generator;
an egress router for receiving and outputting said output of said ingress router;
at least one intermediate node, disposed between said ingress router and said egress router, for transmitting said plurality of data bursts and their respective control packets;
wherein said source generator comprises:

a token generator for randomly generating a plurality of tokens;
a data burst receiver for receiving a plurality of sequentially generated data bursts;
a control packet receiver for receiving a plurality of control packets, each control packet corresponding to a respective one of said plurality of data bursts;
a transmitter for first outputting one of said plurality of control packets received by said control packet receiver and for then outputting its corresponding respective data burst received by said data burst receiver at a time corresponding to the generation of the first of said plurality of tokens by said token generator which occurs at a time in which no data burst is being outputted by said transmitter, the outputting of said data burst being offset from the outputting of its corresponding respective control packet by a time period ($\delta_1$, $\delta_2$, etc.).

**11.** The apparatus of claim 10, wherein said transmitter is adapted to output said plurality of data bursts at an average rate which is equal to the reciprocal of the mean of the probability distribution used to generate said plurality of tokens.

**12.** The apparatus of claim 10 or 11, wherein if T0=0, T1, T2, ... denote the times of occurrences of points of a random point process in which the time periods between occurrences of success of points (Ti-T'(i-1) for i≥1) are independently and identically distributed according to a probability distribution F(.) and if T0($\omega$)= 0, T1($\omega$), T2($\omega$), ... denote a particular realization of the random point process and if the ith data burst arrives at a time ai, and the (i-1)th data burst is outputted at T(ki-1)($\omega$), then the ith data burst is outputted at time Tki($\omega$) which is the first point after T(ki-1) ($\omega$) satisfying the following inequality:

Tki($\omega$)-T(ki-1)($\omega$)≥L(i-1) and Tki($\omega$)≥ai, L(i-1) being the(i-1)th inputted data burst; and wherein:
$\delta$i= Tki($\omega$) - ai, $\delta$i being the offset between the ith data burst and its corresponding respective control packet.

**Patentansprüche**

**1.** Verfahren zum Auswählen des Versatzes (180) zwischen Daten-Bursts (160) und ihren entsprechenden Steuerpaketen (170) in einer optischen Anordnung zur Vermittlung von Bursts, wobei das Verfahren umfasst:

zufälliges Erzeugen einer Vielzahl von Tokens (T1, T2, etc.);

Empfangen einer Vielzahl von sequenziell erzeugten Daten-Bursts (L1, L2, etc.);

Empfangen einer Vielzahl von Steuerpaketen, wobei jedes Steuerpaket jeweils einem der Vielzahl von Daten-Bursts entspricht;

zuerst Ausgeben eines der Vielzahl von Steuerpaketen und dann Ausgeben seines entsprechenden jeweiligen Daten-Bursts (d1, d2, etc.) zu einem Zeitpunkt, welcher der Erzeugung des ersten der Vielzahl von Tokens entspricht, die zu einem Zeitpunkt stattfindet, in dem kein Daten-Burst ausgegeben wird, wobei das Ausgeben des Daten-Bursts gegenüber dem Ausgeben seines entsprechenden jeweiligen Steuerpakets um eine Zeitdauer ($\delta_1$, $\delta_2$, etc.) versetzt ist.

2. Verfahren gemäß Anspruch 1, wobei eine Durchschnittsrate, mit der die Vielzahl von Daten-Bursts ausgegeben wird, gleich dem reziproken Mittelwert der zur Erzeugung der Vielzahl von Tokens verwendeten Wahrscheinlichkeitsverteilung ist.

3. Verfahren gemäß Anspruch 1, wobei wenn T0=0, T1, T2, ... die Zeitpunkte des Auftretens von Punkten eines Zufallspunktprozesses kennzeichnen, bei dem die Zeitdauern zwischen dem Auftreten von aufeinanderfolgenden Punkten (Ti-T(i-1) für i>1) unabhängig und gemäß einer Wahrscheinlichkeitsverteilung F(.) gleich verteilt sind und wenn T0($\omega$)=0, T1($\omega$), T2($\omega$), ... eine bestimmte Realisierung des Zufallspunktprozesses kennzeichnet und wenn der i-te Daten-Burst zu einem Zeitpunkt ai ankommt und wenn der (i-1)-te Daten-Burst bei T(ki-1) ($\omega$) ausgegeben wird, dann der i-te Daten-Burst zum Zeitpunkt Tki($\omega$) ausgegeben wird, welcher der erste Punkt nach T(ki-1) ($\omega$) ist, der die folgende Ungleichung erfüllt:

Tki($\omega$)-T(ki-1)($\omega$) ≥L(i-1) und Tki($\omega$) ≥ai, wobei L(i-1) der (i-1)-te eingegebene Daten-Burst ist; und wobei: δi=Tki($\omega$)-ai, wobei δi der Versatz zwischen dem i-ten Daten-Burst und seinem entsprechendem jeweiligen Steuerpaket ist.

4. Verfahren gemäß Anspruch 2, wobei wenn T0=0, T1, T2, ... die Zeitpunkte des Auftretens von Punkten eines Zufallspunktprozesses kennzeichnen, bei dem die Zeitdauern zwischen dem Auftreten von aufeinanderfolgenden Punkten (Ti-T(i-1) für i>1) unabhängig und gemäß einer Wahrscheinlichkeitsverteilung F(.) gleich verteilt sind und wenn T0($\omega$)=0, T1($\omega$), T2($\omega$), ... eine bestimmte Realisierung des Zufallspunktprozesses kennzeichnet und wenn der i-te Daten-Burst zu einem Zeitpunkt ai ankommt und wenn der (i-1)-te Daten-Burst bei T(ki-1) ($\omega$) ausgegeben wird, dann der i-te Daten-Burst zum Zeitpunkt Tki($\omega$) ausgegeben wird, welcher der erste Punkt nach T(ki-1) ($\omega$) ist, der die folgende Ungleichung erfüllt:

Tki($\omega$)-T(ki-1)($\omega$) ≥L(i-1) und Tki($\omega$) ≥ai, wobei L(i-1) der (i-1)-te eingegebene Daten-Burst ist; und wobei: δi=Tki($\omega$)-ai, wobei δi der Versatz zwischen dem i-ten Daten-Burst und seinem entsprechendem jeweiligen Steuerpaket ist.

5. Verfahren gemäß einem der Ansprüche 1 bis 4, wobei die Vielzahl der Tokens zufällig gemäß einem Poisson-Prozess erzeugt wird.

6. Einrichtung zum Auswählen des Versatzes (180) zwischen Daten-Bursts (160) und ihren jeweiligen Steuerpaketen (170) in einer optischen Anordnung zur Vermittlung von Bursts, wobei die Einrichtung umfasst:

eine Token-Generator zum zufälligen Erzeugen einer Vielzahl von Tokens (T1, T2, etc.);

einen Daten-Burst-Empfänger zum Empfangen einer Vielzahl von sequenziell erzeugten Daten-Bursts (L1, L2, etc.);

einen Steuerpaketempfänger zum Empfangen einer Vielzahl von Steuerpaketen, wobei jedes Steuerpaket einen jeweiligen der Vielzahl von Daten-Bursts entspricht;

einen Sender zum zuerst Ausgeben eines der Vielzahl von Steuerpaketen, die von dem Steuerpaketempfänger empfangen wurden und zum dann Ausgeben seines entsprechenden jeweiligen Daten-Bursts (d1, d2, etc.), der durch den Daten-Burst-Empfänger zu einem Zeitpunkt empfangen worden ist, welcher der Erzeugung des ersten der Vielzahl von Tokens durch den Token-Generator entspricht, die zu einem Zeitpunkt stattfindet, in dem kein Daten-Burst durch den Sender ausgegeben wird, wobei das Ausgeben des Daten-Bursts zu dem Ausgeben seines entsprechenden jeweiligen Steuerpakets um eine Zeitdauer ($\delta_1$, $\delta_2$, etc.) versetzt ist.

7. Einrichtung gemäß Anspruch 6, wobei der Sender ausgestaltet ist, die Vielzahl von Daten-Bursts mit einer Durchschnittsrate auszugeben, die gleich dem reziproken Mittelwert der zur Erzeugung der Vielzahl von Token verwendeten Wahrscheinlichkeitsverteilung ist.

8. Einrichtung gemäß Anspruch 6 oder 7, wobei wenn T0=0, T1, T2, ... die Zeitpunkte des Auftretens von Punkten eines Zufallspunktprozesses kennzeichnen, bei dem die Zeitdauern zwischen dem Auftreten von aufeinanderfolgenden Punkten (Ti-T(i-1) für i>1) unabhängig und gemäß einer Wahrscheinlichkeitsverteilung F(.) gleich verteilt sind und wenn T0($\omega$)=0, T1($\omega$), T2($\omega$), --- eine bestimmte Realisierung des Zufallspunktprozesses kennzeichnet und wenn der i-te Daten-Burst zu einem Zeitpunkt ai ankommt und wenn der (i-1)-te Daten-Burst bei T(ki-1) ($\omega$) ausgegeben wird, dann der i-te Daten-Burst zum Zeitpunkt Tki($\omega$) ausgegeben wird, welcher der erste Punkt nach T(ki-1) ($\omega$) ist, der die folgende Ungleichung erfüllt:

Tki($\omega$)-T(ki-1)($\omega$) ≥L(i-1) und Tki($\omega$) ≥ai, wobei L(i-1) der (i-1)-te eingegebene Daten-Burst ist; und wobei: $\delta$i=Tki($\omega$)-ai, wobei $\delta$i der Versatz zwischen dem i-ten Daten-Burst und seinem entsprechendem jeweiligen Steuerpaket ist.

9. Einrichtung gemäß einem der Ansprüche 6 bis 8, wobei der Token-Generator ausgestaltet ist, die Vielzahl von Tokens gemäß einem Poisson-Prozess zufällig zu erzeugen.

10. Eine optische Einrichtung zur Vermittlung von Bursts umfassend:

einen Quellgenerator zum Erzeugen einer Vielzahl von Daten-Bursts und ihrer jeweiligen Steuerpaketen, wobei jeder Daten-Burst zu einem Zeitpunkt erzeugt wird, der gegenüber dem seines jeweiligen Steuerpakets versetzt ist;
einen Eingangsrouter zum Empfangen und Ausgeben der Vielzahl von Daten-Bursts und ihrer jeweiligen durch den Quellgenerator erzeugten Steuerpakete;
einen Ausgangsrouter zum Empfangen und Ausgeben der Ausgabe des Eingangsrouters;
wenigstens einen Zwischenknoten, der zwischen dem Eingangrouter und dem Ausgangsrouter zum Senden der Vielzahl von Daten-Bursts und ihrer jeweiligen Steuerpakete angeordnet ist;
wobei der Quellgenerator umfasst:

einen Token-Generator zum zufälligen Erzeugung einer Vielzahl von Tokens;
einen Daten-Burst-Empfänger zum Empfangen einer Vielzahl von sequenziell erzeugten Daten-Bursts;
einem Steuerpaketempfänger zum Empfangen einer Vielzahl von Steuerpaketen, wobei jedes Steuerpaket einem jeweiligen der Vielzahl von Daten-Bursts entspricht;
einem Sender zum Ausgeben zuerst eines der Vielzahl von Steuerpaketen, die von dem Steuerpaketempfänger empfangen wurden, und zum dann Ausgeben seines entsprechenden jeweiligen Daten-Bursts, der durch den Daten-Burst-Empfänger zu einem Zeitpunkt empfangen wurde, welcher der Erzeugung des ersten der Vielzahl von Tokens durch den Token-Generator entspricht, die zu einem Zeitpunkt stattfindet, zu dem kein Daten-Burst von dem Sender ausgegeben wird, wobei das Ausgeben des Daten-Bursts gegenüber dem Ausgeben seines entsprechenden jeweiligen Steuerpakets um eine Zeitdauer ($\delta_1$, $\delta_2$, etc.) versetzt ist

11. Einrichtung gemäß Anspruch 10, wobei der Sender ausgestaltet ist, die Vielzahl von Daten-Bursts mit einer Durchschnittsrate auszugeben, die gleich dem reziproken Mittelwert der für die Erzeugung der Vielzahl von Token verwendeten Wahrscheinlichkeitsverteilung ist.

12. Vorrichtung gemäß Anspruch 10 oder 11, wobei wenn T0=0, T1, T2, ... die Zeitpunkte des Auftretens von Punkten eines Zufallspunktprozesses kennzeichnen, bei dem die Zeitdauern zwischen dem Auftreten von aufeinanderfolgenden Punkten (Ti-T(i-1) für i>1) unabhängig und gemäß einer Wahrscheinlichkeitsverteilung F(.) gleich verteilt sind und wenn T0($\omega$)=0, T1($\omega$), T2($\omega$), ... eine bestimmte Realisierung des Zufallspunktprozesses kennzeichnet und wenn der i-te Daten-Burst zu einem Zeitpunkt ai ankommt und wenn der (i-1)-te Daten-Burst bei T(ki-1) ($\omega$) ausgegeben wird, dann der i-te Daten-Burst zum Zeitpunkt Tki($\omega$) ausgegeben wird, welcher der erste Punkt nach T(ki-1) ($\omega$) ist, der die folgende Ungleichung erfüllt:

Tki($\omega$)-T(ki-1)($\omega$) ≥L(i-1) und Tki($\omega$) ≥ai, wobei L(i-1) der (i-1)-te eingegebene Daten-Burst ist; und wobei: $\delta$i=Tki($\omega$)-ai, wobei $\delta$i der Versatz zwischen dem i-ten Daten-Burst und seinem entsprechendem jeweiligen Steuerpaket ist.

**Revendications**

1. Procédé de sélection du décalage (180) entre des salves de données (160) et leurs paquets de commande respectifs (170) dans un arrangement optique de commutation de salve, le procédé comprenant les étapes consistant à :

   générer de manière aléatoire une pluralité d'éléments unitaires (T1, T2, etc.) ;
   recevoir une pluralité de salves de données générées de manière séquentielle (L1, L2, etc.) ;
   recevoir une pluralité de paquets de commande, chaque paquet de commande correspondant à un paquet respectif de ladite pluralité de salves de données ;
   d'abord émettre un paquet de ladite pluralité de paquets de commande et ensuite émettre sa salve de données respective correspondant (d1, d2, etc.) à un moment correspondant à la génération du premier élément unitaire de ladite pluralité d'éléments unitaires qui se produit à un moment où aucune salve de données n'est émise, l'émission de la salve de données étant décalée de l'émission de son paquet de commande respectif correspondant par une période de temps ($\delta_1$, $\delta_2$, etc.).

2. Procédé selon la revendication 1, dans lequel une vitesse moyenne à laquelle ladite pluralité de salves de données est émise est égale à la réciproque du moyen de la distribution de la probabilité utilisé pour générer ladite pluralité éléments unitaires.

3. Procédé selon la revendication 1, dans lequel si T0 = 0, T1, T2, ... indiquent les moments des apparitions des points d'un processus de point aléatoire dans lequel les périodes de temps entre les apparitions réussies des points (Ti - T(i - 1) pour i > 1) sont distribuées de manière indépendante et identique selon une distribution de la probabilité F (-) et si T0($\omega$) = 0, T1($\omega$), T2($\omega$), ... indiquent une réalisation particulière du processus de point aléatoire et si la ième salve de données arrive à un moment ai, et la (i - 1)ième salve de données est émise à T(ki - 1)($\omega$), alors la ième salve de données est émise au moment Tki($\omega$) qui est le premier point après T(ki-1)($\omega$) satisfaisant l'inégalité suivante :

   Tki($\omega$) - T(ki - 1)($\omega$) $\geq$ L(i-1) et Tki($\omega$) $\geq$ ai, L(i - 1) étant la (i-1)ième salve de données entrée ; et dans lequel :
   $\delta$i = Tki($\omega$) - ai, $\delta$i étant le décalage entre la ième salve de données et son paquet de commande respectif correspondant.

4. Procédé selon la revendication 2, dans lequel si T0 = 0, T1, T2, ... indiquent les moments des apparitions des points d'un processus de point aléatoire dans lequel les périodes de temps entre les apparitions réussies des points (Ti - T(i - 1) pour i $\geq$ 1) sont distribuées de manière indépendante et identique selon une distribution de la probabilité F (-) et si T0($\omega$) = 0, T1($\omega$), T2($\omega$), ... indiquent une réalisation particulière du processus de point aléatoire et si la ième salve de données arrive à un moment ai, et la (i - 1)ième salve de données est émise à T(ki - 1)($\omega$), alors la ième salve de données est émise au moment Tki($\omega$) qui est le premier point après T(ki - 1)($\omega$) satisfaisant l'inégalité suivante :

   Tki($\omega$) - T(ki - 1)($\omega$) > L(i - 1) et Tki($\omega$) $\geq$ ai, L(i - 1) étant la (i - 1)ième salve de données entrée ; et dans lequel :
   $\delta$i = Tki($\omega$) - ai, $\delta$i étant le décalage entre la ième salve de données et son paquet de commande respectif correspondant.

5. Procédé selon l'une quelconque des revendications 1 à 4, dans lequel la pluralité de éléments unitaires est générée de manière aléatoire selon un processus Poissonien.

6. Appareil de sélection du décalage (180) entre les salves de données (160) et leurs paquets de commande respectifs (170) dans un arrangement optique de commutation de salve, l'appareil comprenant:

   un générateur d'éléments unitaires pour générer de manière aléatoire une pluralité d'éléments unitaires (T1, T2, etc.) ;
   un récepteur de salves de données pour recevoir une pluralité de salves de données générées de manière séquentielle (L1, L2, etc.) ;
   un récepteur de paquets de commande pour recevoir une pluralité de paquets de commande, chaque paquet de commande correspondant à un paquet respectif de ladite pluralité de salves de données ;
   un émetteur pour d'abord émettre un paquet de ladite pluralité de paquets de commande reçus par ledit récepteur de paquets de commande et pour ensuite émettre sa salve de données respective correspondant (d1, d2, etc.) reçu par ledit récepteur de salves de données à un moment correspondant à la génération du premier élément unitaire de ladite pluralité d'éléments unitaires par ledit générateur d'éléments unitaires qui se produit à un moment où aucune salve de données n'est émise par ledit émetteur, l'émission de ladite salve de données étant décalée de l'émission de son paquet de commande respectif correspondant par une période de temps ($\delta_1$, $\delta_2$, etc.).

**7.** Appareil selon la revendication 6, dans lequel ledit émetteur est adapté pour émettre ladite pluralité de salves de données à une vitesse moyenne qui est égale à la réciproque du moyen de la distribution de la probabilité utilisé pour générer ladite pluralité d'éléments unitaires.

**8.** Appareil selon la revendication 6 ou 7, dans lequel si T0 = 0, T1, T2, ... indiquent les moments des apparitions des points d'un processus de point aléatoire dans lequel les périodes de temps entre les apparitions réussies des points (Ti - T(i - 1) pour i ≥1) sont distribuées de manière indépendante et identique selon une distribution de la probabilité F(-) et si T0($\omega$) = 0, T1($\omega$), T2($\omega$), ... indiquent une réalisation particulière du processus de point aléatoire et si la ième salve de données arrive à un moment ai, et la (i - 1)ième salve de données est émise à T(ki - 1)($\omega$), alors la ième salve de données est émise au moment Tki($\omega$) qui est le premier point après T(k - 1)($\omega$) satisfaisant l'inégalité suivante :

Tki($\omega$) - T(ki - 1)($\omega$) ≥L(i - 1) et Tki($\omega$) ≥ai, L(i - 1) étant la (i - 1)ième salve de données entrée ; et dans lequel : $\delta i$ = Tki($\omega$) - ai, $\delta i$ étant le décalage entre la ième salve de données et son paquet de commande respectif correspondant.

**9.** Appareil selon l'une quelconque des revendications 6 à 8, dans lequel ledit générateur d'éléments unitaires est adapté pour générer de manière aléatoire ladite pluralité d'éléments unitaires selon un processus Poissonien.

**10.** Appareil optique de commutation de salve comprenant :

un générateur de source pour générer une pluralité de salves de données et leurs paquets de commande respectifs, chaque salve de données étant générée à un moment qui est décalé de celui de son paquet de commande respectif ;
un routeur d'entrée pour recevoir et émettre ladite pluralité de salves de données et leurs paquets de commande respectifs générés par ledit générateur de source ;
un routeur de sortie pour recevoir et émettre ladite sortie dudit routeur d'entrée ;
au moins un noeud intermédiaire, disposé entre ledit routeur d'entrée et ledit routeur de sortie, pour transmettre ladite pluralité de salves de données et leurs paquets de commande respectifs ;
dans lequel ledit générateur de source comprend :

un générateur d'éléments unitaires pour générer de manière aléatoire une pluralité d'éléments unitaires ;
un récepteur de salves de données pour recevoir une pluralité de salves de données générées de manière séquentielle ;
un récepteur de paquets de commande pour recevoir une pluralité de paquets de commande, chaque paquet de commande correspondant à un paquet respectif de ladite pluralité de salves de données ;
un émetteur pour d'abord émettre un paquet de ladite pluralité de paquets de commande reçus par ledit récepteur de paquets de commande et pour ensuite émettre sa salve de données respective correspondante reçue par ledit récepteur de salves de données à un moment correspondant à la génération du premier élément unitaire de ladite pluralité d'éléments unitaires par ledit générateur d'éléments unitaires qui se produit à un moment où aucune salve de données n'est émise par ledit émetteur, l'émission de ladite salve de données étant décalée de l'émission de son paquet de commande respectif correspondant par une période de temps ($\delta_1$, $\delta_2$, etc.).

**11.** Appareil selon la revendication 10, dans lequel ledit émetteur est adapté pour émettre ladite pluralité de salves de données à une vitesse moyenne qui est égale à la réciproque du moyen de la distribution de la probabilité utilisé pour générer ladite pluralité d'éléments unitaires.

**12.** Appareil selon la revendication 10 ou 11, dans lequel si T0 = 0, T1, T2, ... indiquent les moments des apparitions des points d'un processus de point aléatoire dans lequel les périodes de temps entre les apparitions réussies des points (Ti - T(i - 1) pour i ≥1) sont distribuées de manière indépendante et identique selon une distribution de la probabilité F(-) et si T0($\omega$) = 0, T1($\omega$), T2($\omega$), ... indiquent une réalisation particulière du processus de point aléatoire et si la ième salve de données arrive à un moment ai, et la (i - 1)ième salve de données est émise à T(ki - 1)($\omega$),

alors la ième salve de données est émise au moment Tki(ω) qui est le premier point après T(ki - 1)(ω) satisfaisant l'inégalité suivante :

Tki(ω) - T(ki - 1)(ω) ≥L(i - 1) et Tki(ω) ≥ai, L(i - 1) étant la (i - 1)ième salve de données entrée ; et dans lequel : δi = Tki(ω) - ai, δi est le décalage entre la ième salve de données et son paquet de commande respectif correspondant.

# FIG. 1

EP 1 224 833 B1

# FIG. 2

AGGREGATED
IP TRAFFIC
INGRESS
ROUTER

EGRESS
ROUTER

201

202 (A)

(C)

210 (A)

211 (A)

(C)

(A)

30

(C)

(B)

(B)

203

212

(B)

40

# FIG. 3

302

| INGRESS ROUTER | IP LAYER | EGRESS ROUTER | 300 |
| QoS MECHANISMS | | QoS MECHANISMS | |

301

313 — BURST
ASSEMBLY

340 { 324 — BURST
SCHEDULER

335 — SHAPER

IP - OPTICAL INTER-
FACE LAYER

VARIABLE
DELAY

350

OPTICAL LAYER — 370

BURST LOSS RATE $<10^{-4}$

# FIG. 4

# FIG. 5

BURST BLOCKING PROBABILITY

EP 1 224 833 B1

# FIG. 6

| | EXPEDITED DATA FORWARDING | ASSURED DATA FORWARDING | BEST EFFORT DATA FORWARDING |
|---|---|---|---|
| IP DIFFSERV → | | | |
| MAC → | SMALL DELAY | MODERATE DELAY | |
| OBS → | RELIABLE OPTICAL DATA PIPE | | |

# FIG. 7

IP TRAFFIC

INGRESS ROUTER

EGRESS ROUTER

QoS1 (Pb~$10^{-3}$)

INGRESS ROUTER

QoS2 (Pb~$10^{-4}$)

EGRESS ROUTER

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **YOO M et al.** New optical burst switching protocol for supporting quality of service. *Proceeding of the SPIE,* vol. 3531, 396-405

- **QIAO C et al.** Choices, features and issues in optical burst switching. *Optical networks magazine, SPIE,* vol. 1 (2), 36-44